Europäisches Patentamt

European Patent Office

Office européen des brevets

(11) Publication number: **0 360 441 B1**

# EUROPEAN PATENT SPECIFICATION

(45) Date of publication of patent specification: **27.04.94** (51) Int. Cl.⁵: **A01N 25/26**

(21) Application number: **89308836.9**

(22) Date of filing: **31.08.89**

Consolidated with 89909940.2/0432200
(European application No./publication No.) by
decision dated 13.05.92.

(54) **Water-soluble or water-dispersible pesticide granules.**

(30) Priority: **02.09.88 US 240896**

(43) Date of publication of application:
**28.03.90 Bulletin 90/13**

(45) Publication of the grant of the patent:
**27.04.94 Bulletin 94/17**

(84) Designated Contracting States:
**AT BE CH DE ES FR GB GR IT LI LU NL SE**

(56) References cited:
**WO-A-87/03579**
**AU-A- 528 086**
**CA-A- 589 926**
**US-A- 4 015 970**

(73) Proprietor: **E.I. DU PONT DE NEMOURS AND COMPANY**
**1007 Market Street**
**Wilmington Delaware 19898(US)**

(72) Inventor: **Tocker, Stanley**
**4656 Norwood Drive**
**Wilmington Delaware 19803(US)**

(74) Representative: **Hildyard, Edward Martin et al**
**Frank B. Dehn & Co.**
**European Patent Attorneys**
**Imperial House**
**15-19 Kingsway**
**London WC2B 6UZ (GB)**

Rank Xerox (UK) Business Services
(3.10/3.09/3.3.3)

## Description

## BACKGROUND OF THE INVENTION

In general, water-soluble or water-dispersible granular compositions are prepared by processes involving pan or fluidized bed granulation, compaction, tabletting or by spraying the active material upon a preformed carrier.

U.S. 3,920,442, issued November 18, 1975, discloses a general method for the production of water-dispersible granular compositions.

U.S. 4,197,112, issued April 8, 1980, discloses a water-dispersible triazine herbicide composition consisting of a triazine herbicide and a surfactant.

Japanese Patent Application 52/30577 (CA88:1627p) discloses a slow release pesticide - fertilizer composition comprising an insecticide, polyoxyethylene monooleate, and urea.

Japanese Patent Application 47/43822 (CA 80:67436S) discloses a stabilized insecticide composition comprising diazinon, polyethylene glycol-400, urea, silicic acid hydrate and diatomaceous earth.

## SUMMARY OF THE INVENTION

This invention provides a water-soluble or water-dispersible, layered pesticidal granular composition for application by aqueous spraying wherein at least one layer comprises:

(1) 0.1 to 50% of a water-soluble pesticide or water-soluble form thereof or water-dispersible form of a pesticide dispersed in;

(2) 1 to 20% of a carrier selected from a water-soluble polyethylene glycol, polypropylene glycol or derivative, copolymer or mixture thereof having a weight average molecular weight in the range 3000-8000 covering the substrate (3) to form said layer thereon;

(3) 50 to 98.9% of a water-soluble or water-dispersible granular substrate of a particle diameter of at least 500 microns;

all percentages being by weight based on the total weight of the layer and substrate.

Specifically preferred granular substrates are potassium carbonate, urea prills, granules of:

2,4-dichlorophenoxyacetic acid,

4-chloro-2-methylphenoxyacetic acid,

( +/-)- or (R, + )-2-(4-chloro-2-methylphenoxy)propionic acid,

glyphosate,

metribuzin,

methabenzthiazuron,

combinations thereof, or their agriculturally suitable salts or solid formulations.

Preferred is a granular composition wherein the coating pesticide(s) are embedded in the carrier and the coating pesticide(s) consists of from 0.5 to 40% of the total weight; the polyethylene glycol, polypropylene glycol, or derivative thereof consists of from 3 to 15% of the total weight, and substrate consists of 70 to 98% of the total weight.

Specifically preferred as coating pesticides are:

2-[(N(4-methoxy-6-methyl-1,3,5 triazin-2-yl)-N-methylamino]carbonyl]amino]sulfonyl] benzoic acid, methyl ester,

3-[[[[(4-methozy-6-methyl-1,3,5 triazin-2-yl)amino]carbonyl],amino]-sulfonyl]-2-thiophene carboxylic acid, methyl ester,

methyl 2-[[[[(4,6-dimethoxy-2-pyrimidinyl)amino]carbonyl]amino]sulfonyl]methyl benzoate, an agriculturally suitable salt thereof, or a water-dispersable powder formulation thereof,

methyl-2-[[[[(4-methoxy-6-methyl-1,3,5-triazin-2-yl)amino]carbonyl]-amino]sulfonyl]benzoate,

2-chloro-N-[(4-methoxy-6-methyl-1,3,5-triazin-2-yl)amino]carbonyl]benzenesulfonamide,

and agriculturally suitable salts, and water-dispersable powder formulations of the foregoing.

According to another aspect of our invention, the composition may be prepared by contacting said water-soluble or water-dispersible granular substrate with said carrier in the neat state, thereby coating the substrate, contacting the coated substrate while the carrier is in a liquid state with said water-soluble or water-dispersible, finely divided pesticide and thereafter recovering a coated granule. The pesticide may be introduced along with the glycol carrier.

Another process for preparing the composition of the invention comprises contacting said water-soluble or water-dispersible granular substrate with said carrier in the neat state, heating the mixture thus obtained to a temperature in the range of 60-125°C to at least partially melt the carrier and thereby coat the substrate, contacting the coated substrate while the carrier is in a molten state with said water-soluble or water-dispersible, finely divided pesticide and thereafter cooling the resultant composition under agitation to solidify the carrier. Preferably the temperature is maintained in the range of 70-90°C.

## DETAILED DESCRIPTION OF THE INVENTION

The most common method of applying agricultural pesticides involves their dilution in a solvent followed by spraying of the resulting solution or dispersion. Because of the increasing costs of non-aqueous solvents and the toxicity of some of them, formulations involving water-soluble or water-dispersible granules have become increasingly popular. In such formulations, the dispersed particles formed on dilution should be no greater than 50 microns, and preferably less than 10 microns, in their largest dimension to avoid nozzle pluggage or premature settling which results in uneven application of the pesticide. Consequently, it is preferred that all of the components of the formulated product rapidly and completely dissolve in the dilution water.

Conventional methods for the preparation of water-soluble or water-dispersible granules involve fluidized bed or pan granulation techniques or the impregnation of an active pesticide agent on preformed mineral granules. Granules prepared by bed or pan granulation are generally sprayable upon dilution while the impregnated compositions are applied mechanically, for example, using spreaders.

Often it is desirable to use mixtures of two or more pesticides of different functions to provide broad spectrum control over a variety of weeds and/or undesirable organisms for example a mixture of a herbicide and an insecticide. Unfortunately, some of the individual components are physically or chemically incompatible as mixtures, especially in long-term storage. For example, carbamate insecticides are generally unstable in the presence of alkaline components and sulfonylurea herbicides are known to be unstable in the presence of acidic materials. The chemical incompatibility can be due to an impurity present in the complementary pesticide and not the bioactive component itself. For these reasons it would be desirable to have a sprayable, formulated product consisting of particles or granules wherein the active components are physically separated.

The present invention comprises low cost water-soluble granules or water-dispersible granular formulations prepared by the layering or coating of a water-soluble pesticide or preformulated water-dispersible form of a pesticide onto a granular substrate, itself water-soluble or water-dispersible, using a water-soluble polyethylene glycol as a carrier. Preparation of these formulations involves the use of simple mixing techniques and equipment in contrast to the specialized techniques and equipment required for fluidized bed and pan granulation procedures. The use of simple mixing also allows for the easy incorporation of formulation adjuvants and stabilizers.

Many pesticides have been formulated to dry flowable granular compositions suitable for overcoating by the process of this invention. They include herbicidal sulfonamides, phenylether herbicides, glyphosate, metribuzin, bromacil, diuron, hexazinone, manzate, flusilazol, oxamyl and hexythiazox.

A water-soluble pesticide refers to compounds which are substantially dissolved in water under the conditions of temperature and concentration at which application (e.g., spraying of the solution) is to be carried out.

Pesticide (active ingredient) means herbicides, fungicides, insecticides, nematocides, miticides, virucides, algicides, bactericides, plant growth regulants, defoliants, insect attractants and repellents and particularly compatible combinations of the foregoing. Preferred are herbicides selected from the class of herbicidal sulfonylureas, nonlimiting examples of which include the following. Each of these may be water soluble or formulated in a water dispersible or water soluble form:

2-chloro-N-[(4-methoxy-6-methyl-1,3,5-triazin-2-yl)amino]carbonyl]benzenesulfonamide Chlorsulfuron

methyl2-[[[[(4,6-dimethyl-2-pyrimidinyl)amino]-carbonyl]amino]sulfonyl]benzoate Sulfometuron methyl

methyl-2-[[[[(4-methoxy-6-methyl-1,3,5-triazin-2-yl)amino]carbonyl]amino]sulfonyl]benzoate Metsulfuron

2-[[N-(4-methoxy-6-methyl-1,3,5-triazin-2-yl)-N-methylamino]carbonyl]amino]sulfonyl]benzoic acid, methyl ester

Express (TM)

ethyl 2-[[[[(4-chloro-6-methoxy-2-pyrimidinyl), amino]carbonyl]amino]sulfonyl]benzoate Chlorimuron ethyl

2-[[(4-ethoxy-6-methylamino-1,3,5-triazin-2-yl)aminocarbonyl]aminosulfonyl]benzoic acid, methyl ester

Muster (TM)

2-[[(4,6-dimethoxy-1,3,5-triazin-2-yl)aminocarbonyl]aminosulfonyl]-4-(2,2,2-trifluoroethoxy)benzoic acid, ethyl ester

4-chloro-2-[[(4-methoxy-6-methyl-1,3,5-triazin-2-yl)aminocarbonyl]aminosulfonyl]benzoic acid, isopropyl

3

EP 0 360 441 B1

ester

3-[[[[(4-methoxy-6-methyl-1,3,5-triazin-2-yl)amino]-carbonyl]amino]sulfonyl]-2-thiophene carboxylic acid, methyl ester

Thiameturon methyl

methyl 2-[[[[(4,6-dimethoxy-2-pyrimidinyl)amino]-carbonyl]amino]sulfonyl]methylbenzoate

Bensulfuron methyl

2-[[(4,6-dimethoxypyrimidin-2-yl)aminocarbonyl]aminosulfonyl]N,N-dimethyl-3-pyridinecarboxamide

2-[[(4,6-dimethoxypyrimidin-2-yl))aminocarbonyl]aminosulfonyl]-3-pyridinecarboxylic acid, methyl ester

N-[(4,6-dimethoxypyrimidin-2-yl)) aminocarbonyl]-3-(ethylsulfonyl-2-pyridinesulfonamide

N-[(4,6-dimethoxypyrimidin-2-yl))aminocarbonyl]-2,3-dihydro-2-methyl-benzo(b)thiophene-7-sulfonamide, 1,1 dioxide

2-[[[[(4,6-bis(difluoromethoxy)-2-pyrimidinyl]amino]carbonyl]amino]sulfonyl]benzoic acid, methyl ester

ethyl 5-[3-(4,6-dimethoxypyrimidin-2-yl)ureidosulfonyl]-1-methylpyrazole-4-carboxylate

N-[(6-methoxy-4-methyl-1,3,5-triazin-2-yl)aminocarbonyl]-2-(2-chloroethoxy)benzene sulfonamide

N-[(4,6-dimethoxy-1,3,5-triazin-2-yl)amino-carbonyl]-2-(2-methoxyethoxy)benzenesulfonamide

N-[(4,6-dimethoxypyrimidin-2-yl)-amino]carbonyl]-3-trifluoromethyl-2-pyridinesulfonamide.

4

EP 0 360 441 B1

Other types of herbicides that can be advantageously employed in this invention are given below:

| Common Name | Chemical Name |
|---|---|
| acetochlor | 2-chloro-N-(ethoxymethyl)-N(2-ethyl-6-methylphenyl)-acetamide |
| acifluorfen | 5-[2-chloro-4-(trifluoromethyl)-phenoxy]-2-nitrobenzoic acid |
| acrolein | 2-propenal |
| alachlor | 2-chloro-N-(2,6-diethylphenyl)-N(methoxymethyl)acetamide |
| ametryn | N-ethyl-N'-(1-methylethyl)-6-(methylthio)-1,3,5-triazine-2,4diamine |
| amitrole | 1H-1,2,4-triazol-3-amine |
| AMS | ammonium sulfamate |
| asulam | methyl [(4-aminophenyl)sulfonyl]-carbamate |
| atrazine | 6-chloro-N-ethyl-N'-(1-methyl-ethyl)1,3,5-triazine-2,4-diamine |
| barban | 4-chloro-2-butynyl 3-chloro-carbamate |
| benefin | N-butyl-N-ethyl-2,6-dinitro-4-(trifluoromethyl)benzenamine |
| bensulide | O,O-bis(1-methylethyl) S-[2[(phenylsulfonyl)amino]-ethyl]phosphorodithioate |

5

| | |
|---|---|
| bentazon | 3-(1-methylethyl)-(1H)-2,1,3-benzothiadiazin-4(3H)-one, 2,2-dioxide |
| benzofluor | N-[4-(ethylthio)-2-(trifluoro-methyl)phenyl]methane-sulfonamide |
| benzoylprop | N-benzoyl-N-(3,4-dichlorophenyl)-DLalanine |
| bifenox | methyl 5-(2,4-dichloro-phenoxy)-2nitrobenzoate |
| bromacil | 5-bromo-6-methyl-3-(1-methylpro-pyl)2,4(1H,3H)pyrimidinedione |
| bromoxynil | 3,5-dibromo-4-hydroxybenzonitrile |
| butachlor | N-(butoxymethyl)-2-chloro-N-(2,6diethylphenyl)acetamide |
| buthidazole | 3-[5-(1,1-dimethylethyl)-1,3,4-thiadiazol-2-yl]-4-hydroxy-1-methyl-2imidazolidinone |
| butralin | 4-(1,1-dimethylethyl)-N-(1-methylpropyl)-2,6-dinitro-benzenamine |
| butylate | S-ethyl bis(2-methylpropyl)car-bamothioate |
| cacodylic | dimethyl arsinic oxide acid |
| CDAA | 2-chloro-N,N-di-2-propenyl-acetamide |
| CDEC | 2-chloroallyl diethyldi-thiocarbamate |
| chloramben | 3-amino-2,5-dichlorobenzoic acid |
| chlorbromuron | 3-(4-bromo-3-chlorophenyl)-1-methoxy-1methylurea |
| chlorimuron | 2-[[[[(4-chloro-6-methoxy-2-pyrimiethyldinyl)ethylamino]-carbonyl]amino]sulfonyl]benzoic acid, ethyl ester |

6

| | |
|---|---|
| chloroxuron | N'-[4-(4-chlorophenoxy)phenyl]-N,Ndimethylurea |
| chlorpropham | 1-methylethyl 3-chlorophenyl-carbamate |
| chlortoluron | N'-(3-chloro-4-methylphenyl)-N,Ndimethylurea |
| cinmethylin | exo-1-methyl-4-(1-methylethyl)-2-[(2methylphenyl)methoxy]-7-oxabicyclo[2.2.1]heptane |
| clethodim | (E,E)-(+)-2-[1-[[(3-chloro-2-propenyl)oxy]imino]propyl]-5-[2-(ethylthio)propyl]-3-hydroxy-2-cyclohexen-1-one |
| clomazone | 2-[(2-chlorophenyl)methyl]-4,4-dimethyl3-isoxazolidinone |
| cloproxydim | (E,E)-2-[1-[[(3-chloro-2-pro-penyl)oxy)imino]butyl]-5-[2-(ethylthio)propyl]3-hydroxy-2-cyclohexen-1-one |
| clopyralid | 3,6-dichloro-2-pyridinecar-boxylic acid |
| CMA | calcium salt of MAA |
| cyanazine | 2-[[4-chloro-6-(ethylamino)-1,3,5-triazin-2-yl]amino]-2-methylpropanenitrile |
| cycloate | S-ethyl cyclohexylethylcar-bamothioate |
| cycluron | 3-cyclooctyl-1,1-dimethylurea |
| cyperquat | 1-methyl-4-phenylpyridinium |
| cyprazine | 2-chloro-4-(cyclopropylamino)-6-(isopropylamino)-s-triazine |
| cyprazole | N-[5-(2-chloro-1,1-dimethyl-ethyl)-1,3,4thiadiazol-2-yl]cyclopropanecarboxamide |

7

| | |
|---|---|
| cypromid | 3',4'-dichlorocyclopropane-carboxanilide |
| dalapon | 2,2-dichloropropanoic acid |
| dazomet | tetrahydro-3,5-dimethyl-2H-1,3,5-thiadiazine-2-thione |
| DCPA | dimethyl 2,3,5,6-tetrachloro-1,4-benzene-dicarboxylate |
| desmediphan | ethyl [3-[[(phenylamino)-carbonyl]oxy]phenyl]carbamate |
| desmetryn | 2-(isopropylamino)-4-(methyl-amino)-6(methylthio)-s-triazine |
| diallate | S-(2,3-dichloro-2-propenyl)-bis(1methylethyl)carbamothioate |
| dicamba | 3,6-dichloro-2-methoxybenzoic acid |
| dichlobenil | 2,6-dichlorobenzonitrile |
| dichlorprop | (+)-2-(2,4-dichlorophenoxy)-propanoic acid |
| dichlofop | (+)-2-[4-(2,4-dichlorophenoxy)-phenoxy]propanoic acid |
| diethatyl | N-(chloroacetyl)-N-(2,6-diethyl-phenyl)glycine |
| difenzoquat | 1,2-dimethyl-3,5-diphenyl-1H-pyrazolium |
| dinitramine | N3,N3-diethyl-2,4-dinitro-6-(trifluoromethyl)-1,3-benzenediamine |
| dinoseb | 2-(1-methylpropyl)-4,6-dinitro-phenol |
| diphenamid | N,N-dimethyl-a-phenylbenzene-acetamide |

| | |
|---|---|
| dipropetryn | 6-(ethylthio)-N,N'-bis(1-methyl-ethyl)1,3,5-triazine-2,4-diamine |
| diquat | 6,7-dihydrodipyrido[1,2-a:2',1'-.c]pyrazinedium ion |
| diuron | N'-(3,4-dichlorophenyl)-N,N-dimethylurea |
| DNOC | 2-methyl-4,6-dinitrophenol |
| DSMA | disodium salt of MAA |
| endothall | 7-oxabicyclo[2.2.1]heptane-2,3-dicarboxylic acid |
| EPTC | S-ethyl dipropylcarbamothioate |
| ethalfluralin | N-ethyl-N-(2-methyl-2-propenyl)-2,6dinitro-4-(trifluoro-methyl)benzenamine |
| ethofumesate | (+)-2-ethoxy-2,3-dihydro-3,3-dimethyl5-benzofuranyl methanesulfonate |
| fenac | 2,3,6-trichlorobenzeneacetic acid |
| fenoxaprop | (+)-2-[4-[(6-chloro-2-benzoxa-zolyl)oxy]phenoxy]propanoic acid |
| fenuron | N,N-dimethyl-N'-phenylurea |
| fenuron TCA | Salt of fenuron and TCA |
| flamprop | N-benzoyl-N-(3-chloro-4-fluoro-phenyl)DL-alanine |
| fluazifop | (+)-2-[4-[[5-(trifluoromethyl)-2-pyridinyl]oxy]phenoxy]pro-panoic acid |
| fluazifop-P | (R)-2-[4-[[5-(trifluoromethyl)-2-pyridinyl]oxy]phenoxy]pro-panoic acid |

| | |
|---|---|
| fluchloralin | N-(2-chloroethyl)-2,6-dinitro-N-propyl4-(trifluoromethyl)-benzenamine |
| fluometuron | N,N-dimethyl-N'-[3-(trifluoro-methyl)phenyl]urea |
| fluorochlor-idone | 3-chloro-4-(chloromethyl)-1-[3-(trifluoromethyl)phenyl]-2-pyrrolidinone |
| fluorodifen | p-nitrophenyl α,α,α-trifluoro-2-nitro-p-tolyl ether |
| fluorogly-cofen | carboxymethyl 5-[2-chloro-4-(trifluoromethyl)phenoxy]-2-nitrobenzoate |
| fluridone | 1-methyl-3-phenyl-5-[3-(tri-fluoromethyl)phenyl]-4(1H)-pyridinone |
| fluroxypyr | acetic acid, 2-[[[4-amino-3,5-dichloro-6-fluoro-2-pyridinyl]oxy]]-,[[methyl-heptyl]ester] |
| fomesafen | 5-[2-chloro-4-(trifluoromethyl)-phenoxy]N-(methylsulfonyl)-2-nitrobenzamide |
| fosamine | ethyl hydrogen (aminocarbonyl)-phosphate |
| glyphosate | N-(phosphonomethyl)glycine |
| haloxyfop | 2-[4-[[3-chloro-5-(trifluoro-methyl)-2-pyridinyl]oxy]-phenoxy]propanoic acid |
| hexaflurate | potassium hexafluoroarsenate |
| hexazinone | 3-cyclohexyl-6-(dimethylamino)-1-methyl1,3,5-triazine-2,4(1H,3H)-dione |

| | |
|---|---|
| imazametha-benz | 6-(4-isopropyl-4-methyl-5-oxo-2-imidazolin-2-yl)-m-toluic acid, methyl ester and 6-(4-isopropyl4-methyl-5-oxo-2-imidazolin-2-yl)p-toluic acid, methyl ester |
| imazapyr | (+)-2-[4,5-dihydro-4-methyl-4-(1-methylethyl)-5-oxo-1H-imidazol-2-yl]-3pyridine-carboxylic acid |
| imazaquin | 2-[4,5-dihydro-4-methyl-4-(1-methylethyl)-5-oxo-1H-imidazol-2-yl]-3quinoline-carboxylic acid |
| imazethapyr | (+)-2-[4,5-dihydro-4-methyl-4-(1-methylethyl)-5-oxo-1H-imidazol-2-yl]-5ethyl-3-pyridinecar-boxylic acid |
| ioxynil | 4-hydroxy-3,5-diiodobenzonitrile |
| isopropalin | 4-(1-methylethyl)-2,6-dinitro-N,Ndipropylbenzenamine |
| isoproturon | N-(4-isopropylphenyl)-N',N'-dimethylurea |
| isouron | N'-[5-(1,1-dimethylethyl)-3-isoxazolyl]N,N-dimethylurea |
| isoxaben | N-[3-(1-ethyl-1-methylpropyl)-5isoxazolyl]-2,6-dimethoxy-benzamide |
| karbutilate | 3-[[(dimethylamino)carbonyl]-amino]phenyl-(1,1-dimethyl-ethyl)carbamate |
| lactofen | (+)-2-ethoxy-1-methyl-2-oxo-ethyl 5-[2chloro-4-(trifluoro-methyl)phenoxy]2-nitrobenzoate |

| | |
|---|---|
| lenacil | 3-cyclohexyl-6,7-dihydro-1H-cyclopentapyrimidine-2,4(3H,5H)-dione |
| linuron | N'-(3,4-dichlorophenyl)-N-methoxy-Nmethylurea |
| MAA | methylarsonic acid |
| MAMA | monoammonium salt of MAA |
| MCPA | (4-chloro-2-methylphenoxy)acetic acid |
| MCPB | 4-(4-chloro-2-methylphenoxy)-butanoic acid |
| mecoprop | (+)-2-(4-chloro-2-methylphenoxy)-propanoic acid |
| mefluidide | N-[2,4-dimethyl-5-[[(trifluoro-methyl)sulfonyl]amino]phenyl]-acetamide |
| methal-propalin | N-(2-methyl-2-propenyl)-2,6-dinitro-N-4-(tri-fluoromethyl)benzenamide |
| methabenz-thiazuron | 1,3-dimethyl-3-(2-benzothia-zolyl)urea |
| metham | methylcarbamodithioic acid |
| methazole | 2-(3,4-dichlorophenyl)-4-methyl-1,2,4oxadiazolidine-3,5-dione |
| methoxuron | N'-(3-chloro-4-methoxyphenyl)-N,Ndimethylurea |
| metolachlor | 2-chloro-N-(2-ethyl-6-methyl-phenyl)-N(2-methoxy-1-methylethyl)acetamide |
| metribuzin | 4-amino-6-(1,1-dimethylethyl)-3-(methylthio)-1,2,4-triazin-5(4H)-one |
| MH | 1,2-dihydro-3,6-pyridazinedione |

| | |
|---|---|
| molinate | S-ethyl hexahydro-1H-azepine-1-carbothioate |
| monolinuron | 3-(p-chlorophenyl)-1-methoxy-1-methylurea |
| monuron | N'-(4-chlorophenyl)-N,N-dimethyl-urea |
| monuron TCA | Salt of monuron and TCA |
| MSMA | monosodium salt of MAA |
| napropamide | N,N-diethyl-2-(1-naphthalenyl-oxy)propanamide |
| naptalam | 2-[(1-naphthalenylamino)carbo-nyl]benzoic acid |
| neburon | 1-butyl-3-(3,4-dichlorophenyl)-1-methylurea |
| nitralin | 4-(methylsulfonyl)-2,6-dinitro-N,Ndipropylaniline |
| nitrofen | 2,4-dichloro-1-(4-nitrophenoxy)-benzene |
| nitrofluorfen | 2-chloro-1-(4-nitrophenoxy)-4-(trifluoromethyl)benzene |
| norea | N,N-dimethyl-N'-(octahydro-4,7-methanolH-inden-5-yl)urea 3aα,4α,5α,7α,7aα-isomer |
| norflurazon | 4-chloro-5-(methylamino)-2-[3-(trifluoromethyl)phenyl]-3(2H)pyridazinone |
| oryzalin | 4-(dipropylamino)-3,5-dinitro-benzenesulfonamide |
| oxadiazon | 3-[2,4-dichloro-5-(1-methyl-ethoxy)phenyl]-5-(1,1-dimethylethyl)1,3,4-oxa-diazol-2(3H)-one |

| oxyfluorfen | 2-chloro-1-(3-ethoxy-4-nitro-phenoxy)-4-(trifluoromethyl)-benzene |
| paraquat | 1,1'-dimethyl-4,4'-dipyridin-ium ion |
| pebulate | S-propyl butylethylcarbamothioate |
| pendimethalin | N-(1-ethylpropyl)-3,4-dimethyl-2,6dinitrobenzenamine |
| perfluidone | 1,1,1-trifluoro-N-[2-methyl-4-(phenylsulfonyl)phenyl]methane-sulfonamide |
| phenmedipham | 3-[(methoxycarbonyl)amino]phenyl-(3methylphenyl)carbamate |
| picloram | 4-amino-3,5,6-trichloro-2-pyridinecarboxylic acid |
| PPG-1013 | 5-[2-chloro-4-(trifluoromethyl)-phenoxy]-2-nitroacetophenone oxime-O-acetic acid, methyl ester |
| procyazine | 2-[[4-chloro-6-(cyclopropyl-amino)-1,3,5triazine-2-yl]amino]-2-methylpropane-nitrile |
| profluralin | N-(cyclopropylmethyl)-2,6-dinitro-Npropyl-4-(tri-fluoromethyl)benzenamine |
| prometon | 6-methoxy-N,N'-bis(1-methyl-ethyl)-1,3,5triazine-2,4-diamine |
| prometryn | N,N'-bis(1-methylethyl)-6-(methylthio)1,3,5-triazine-2,4-diamine |
| pronamide | 3,5-dichloro-N-(1,1-dimethyl-2-propynyl)benzamide |

14

EP 0 360 441 B1

| | |
|---|---|
| propachlor | 2-chloro-N-(1-methylethyl)-N-phenylacetamide |
| propanil | N-(3,4-dichlorophenyl)propanamide |
| propazine | 6-chloro-N,N'-bis(1-methylethyl)-1,3,5-triazine-2,4-diamine |
| propham | 1-methylethyl phenylcarbamate |
| prosulfalin | N-[[4-(dipropylamino)-3,5-dinitrophenyl]sulfonyl]-S,S-dimethylsulfilimine |
| prynachlor | 2-chloro-N-(1-methyl-2-pro-pynyl)acetanilide |
| pyrazon | 5-amino-4-chloro-2-phenyl-3(2H)pyridazinone |
| quizalofop | (+)-2-[4-[(6-chloro-2-quinoxalinyl)ethyloxy]-phenoxy]propanoic acid, ethyl ester |
| secbumeton | N-ethyl-6-methoxy-N'-(1-methylpropyl)1,3,5-triazine-2,4-diamine |
| sethoxydim | 2-[1-(ethoxyimino)butyl]-5-[2-(ethylthio)propyl]-3-hydroxy-2-cyclohexen-1-one |
| siduron | N-(2-methylcyclohexyl)-N'-phenylurea |
| simazine | 6-chloro-N,N'-diethyl-1,3,5-triazine2,4-diamine |
| sulfometuron | 2-[[[[(4,6-dimethyl-2-pyrimi-dinyl)methylamino]carbonyl]-amino]sulfonyl]benzoic acid, methyl ester |
| TCA | trichloroacetic acid |

15

| | |
|---|---|
| tebuthiuron | N-[5-(1,1-dimethylethyl)-1,3,4-thiadiazol-2-yl]-N,N'-dimethylurea |
| terbacil | 5-chloro-3-(1,1-dimethylethyl)-6-methyl-2,4(1H,3H)-pyrimidinedione |
| terbuchlor | N-(butoxymethyl)-2-chloro-N-[2-(1,1dimethylethyl)-6-methyl-phenyl]acetamide |
| terbuthyl-azine | 2-(tert-butylamino)-4-chloro-6-(ethylamino)-s-triazine |
| terbutol | 2,6-di-tert-butyl-p-tolyl methylcarbamate |
| terbutryn | N-(1,1-dimethylethyl)-N'-ethyl-6(methylthio)-1,3,5-triazine-2,4-diamine |
| thiobencarb | S-[(4-chlorophenyl)methyl] diethylcarbamothioate |
| triallate | S-(2,3,3-trichloro-2-propenyl)-bis(1methylethyl)carbamothioate |
| triclopyr | [(3,5,6-trichloro-2-pyridinyl)-oxy]acetic acid |
| tridiphane | 2-(3,5-dichlorophenyl)-2-(2,2,2trichloroethyl)oxirane |
| trifluralin | 2,6-dinitro-N,N-dipropyl-4-(trifluoromethyl)benzenamine |
| trimeturon | 1-(p-chlorophenyl)-2,3,3-tri-methylpseudourea |
| 2,4-D | (2,4-dichlorophenoxy)acetic acid |
| 2,4-DB | 4-(2,4-dichlorophenoxy)butanoic acid |
| vernolate | S-propyl dipropylcarbamothioate |
| xylachlor | 2-chloro-N-(2,3-dimethylphenyl)-N(1-methylethyl)acetamide |

Preferred coating pesticides are the agriculturally suitable salts of herbicidal sulfonylureas.

Specifically preferred coating pesticides are the lithium and sodium salts of 2-[[N-(4-methoxy-6-methyl-1,3,5-triazin-2-yl)-N-methylaminocarbonyl]aminosulfonyl] benzoic acid, methyl ester.

A water-dispersible form of a pesticide refers to the various agriculturally suitable formulations including wettable powders used in coatings and dry flowables used as granular substrates. Preferred as substrate classes are dry flowable formulations of herbicidal materials and urea prills.

Preferred water-soluble polyethylene glycols are solids that have a weight average molecular weight between 3000 and 8000. Examples include Carbowax® polyethylene glycols designated by their weight average molecular weights (Union Carbide Corporation). Derivatives of the water-soluble glycols, e.g. esters and ethers, are also operable. Examples of these include Macol® DNP150, a monylphenol derivative made by Mazer Chemicals, Inc. and Carbowax® methoxy polyethylene glycol 5000 (Union Carbide Corporation). Polyethylene glycols having excessively high molecular weights can be impractical due to reduced solution rate. Additionally, low molecular weight polyethylene glycol or polypropylene glycol polymers and their derivatives that are normally liquid. However, the maximum amount of active material that can be incorporated in the coating is less relative to a solid carrier. Examples of liquid carriers are polyethylene glycols or methoxypolyethylene glycols having molecular weights from 200-600, polypropylene glycols, polyethylene glycol derivatives such as liquid Pluronic® polyethylene glycol/polypropylene glycol copolymers, and other commercial water-soluble polyethylene glycol derivatives such as Tween® 20, and 40 surfactants (ICI) which are polyoxyethylene sorbitan fatty acid esters.

A wide range of materials can be utilized as the granular supporting substrate including prills (e.g.,urea, ammonium nitrate), crystals (e.g., sugars) or even water-soluble or water-dispersible granular formulations of other pesticides or fertilizer (e.g. herbicidal sulfonamides, herbicidal phenyl ethers, and herbicidal phosphonomethyl glycine derivatives. The use of such granular formulations as solid supports thus allows the preparation of water-soluble or water-dispersible granular formulations of otherwise incompatible mixtures of pesticides with the individual components isolated in separate layers. The substrate may comprise a granular pesticide singly or in combination with the above inert materials or fertilizer, or one or more different pesticides.

When this substrate is a material that produces alkaline solutions, and the pesticide is a herbicidal sulfonamide, the herbicidal sulfonamide can be used in the technical form and the more water-soluble salt can be generated when the granules are added to water in preparation for spraying. An example of an alkaline substrate is granular potassium carbonate. This improvement eliminates a separate salt promoter.

The carrier may contain more than one active ingredient if the ingredients are not undesirably interactive. Multiple carrier layers can be employed to separate ingredients to prevent undesirable interaction.

Preferred among the many known preparation means are mechanical blenders.

In one embodiment, the granular substrate is mixed with the solid polyethylene glycol, or derivative carrier and heated to 60-125°C, preferably 70-90°C, with constant agitation, until the substrate is coated. The active agent or a mixture of active compounds in finely divided form is then added to the hot substrate and the blend is slowly cooled to room temperature, all under constant agitation. If a second layer is to be added, additional carrier can be added prior to cooling followed by additional pesticide. Alternatively, the cooled composition can be reheated and a second coating applied as previously described.

If the substrate is a bioactive material or formulated bioactive material, coating of the surface with carrier and another bioactive compound produces a layered granular product in which the active compounds are physically separated.

Alternatively, an active agent or mixture of active agents can be preblended with the molten carrier and the substrate can be added last.

When a liquid carrier is used, the above procedure is followed, but the heating is omitted.

The following examples serve to illustrate but not limit the compositions of the invention.

Example 1

A mixture of 5.0 g of urea prills and 0.3 g polyethylene glycol of a weight average molecular weight of 8000 (Carbowax® polyethylene glycol 8000, Union Carbide Corp.) was heated in a steam bath with gentle stirring until the prills were completely coated with polymer. Then 1.0 g of the sodium salt of 2-[[N-(4-methoxy-6-methyl-1,3,5-triazin-2-yl)-N-methyl aminocarbonyl]aminosulfonyl]benzoic acid, methyl ester in powdered form was added with continued stirring and heating. As soon as the prills were evenly coated with the active component, heating was discontinued, and the resultant granules were cooled to room temperature with constant mixing. The product contained 15% of 2-[[N-(4-methoxy-6-methyl 1,3,5-triazin-2-yl)-N-methylaminocarbonyl] aminosulfonyl]benzoic acid, methyl ester. A 1.0 g sample completely dissolved in 100 mL of tap water at 22°C in 45 seconds with gentle stirring.

Example 2

Example 1 was repeated using a mixture of 0.9 g of the lithium salt of 2,4-dichlorophenoxy acetic acid and 0.1 g of sodium salt of 2-[[N-(4-methoxy-6-methyl-1,3,5-triazin 2-yl)-N-methylaminocarbonyl]-aminosulfonyl]benzoic acid, methyl ester as the active components. The resultant prills completely dissolved in water in 38 seconds under the conditions described in Example 1.

Example 3

Example 1 was repeated using, 0.9 g of the magnesium salt of a mixture of dichlorprop-P(R)-2-(2,4-dichlorophenoxy)-propionic acid, and 0.1 g of the sodium salt of 2-[(N (4-methoxy-6-methyl-1,3,5-triazin-2-yl)-N-methyl aminocarbonyl]aminosulfonyl]benzoic acid, methyl ester as the active component. The resultant prills dissolved in under 60 seconds in water.

Example 4

Example 1 was repeated using Macol® DNP150 (the dinonylphenol derivative of polyethylene glycol, molecular weight (6000, Mazer Chemicals, Inc.) instead of polyethylene glycol. The dissolution time was 55 seconds.

Example 5

Urea prills (28.8 g) were heated to 80°C in a rotating pan and treated portionwise with 4.6 g Carbowax® 8000. Mixing was continued until all of the prills were coated. Then, 20.5 g of the sodium salt of Express™ was gradually added while rotation was continued to ensure thorough mixing. This was followed by sequential and gradual addition of 4.0 g more of the Carbowax® carrier and 9.0 g of the sodium salt of Express™. The coated prills were then allowed to cool under constant rotation giving a granular product containing 41% Express™.

Using the process described in Example 1, the following granular products were prepared.

| Example Number | Active Coating | Carrier | Granular Substrate |
|---|---|---|---|
| 6 | Express™, sodium salt | PEG 8000 | $CaCl_2$ |
| 7 | Express™, sodium salt | PEG 8000 | Sugar |
| 8 | thiameturon methyl, sodium salt + Express™, sodium salt (2:1) | PEG 8000 | Urea |
| 9 | thiameturon methyl | PEG 8000 | $K_2CO_3$ |
| 10 | Express™ | PEG 8000 | $K_2CO_3$ |
| 11 | thiameturon methyl + Express™ (2:1) | PEG 8000 | $K_2CO_3$ |
| 12 | thiameturon methyl, sodium salt + Express™ (2:1) | PEG 8000 | $K_2CO_3$ |
| 13 | bensulfuron methyl | PEG 8000 | Urea |
| 14 | Express™, sodium salt | PEG 8000 | $CaCl_2$ |
| 15 | Express™, sodium salt | PEG 8000 | Sugar |

Example 16

A mixture of 0.3 g of Carbowax® polyethelene glycol 8000 and 0.5 g of powdered sodium salt of ethyl-2-[[[[(4-chloro-6-methoxy-2-pyrimidinyl)amino]carbonyl]amino]sulfonyl]benzoate was stirred together under steam bath heating until the powder was wet by the polymer. Then 5.0 g of Lexone® water dispersible granules (75% metribuzin, manufacturer E. I. du Pont de Nemours & Company) was added and the mixture was stirred while heating until uniform coating was observed. The granules were then cooled to room temperature under constant stirring. The resultant product dispersed in water in under 60 seconds to give a sprayable mixture containing dispersed and dissolved metribuzin along with dissolved sodium salt of ethyl 2-[[[[(4-chloro-6-methoxy-2-pyrimidinyl)amino]carbonyl]amino]sulfonyl]benzoate.

18

Example 17

Example 5 was repeated using herbicide granules as the substrate and 0.6 g polyethylene glycol 8000 as the carrier. The resultant granules are water-dispersible and contain 36% of 2-(2-chlorophenyl)methyl-4,4-dimethyl-3-isooxazolidone.

Using the procedure described in Example 16, the following granular products were prepared:

| EXAMPLE NUMBER | ACTIVE IN COATING | CARRIER | DRY-FLOWABLE GRANULAR FORMULATION |
|---|---|---|---|
| 18 | Express™ | PEG 8000 | Na salt of 2,4-D, 60% a.i. |
| 19 | thiameturon methyl, lithium salt | PEG 8000 | Na salt of 2,4-D, 60% a.i. |
| 20 | Express™ | PEG 8000 | Krovar II (Bromacil) |

Example 21

Example 1 is repeated using 8.0 g of urea prills, 0.54 g Carbowax® 8000 and 1.74 g of Londax® containing 60% 2[[[[(4,6-dimethoxy-2-pyrimidinyl)amino]carbonyl]amino]sulfonyl]methylbenzoate and 40% formulation adjuvants. This powder has been used for preparation of uncoated Londax® 60DI, a commercial product used to control weeds in rice. The coated prills, containing 10.1% active ingredient, give a fine dispersion of the active ingredient in slightly agitated water approximately 1 min after dilution.

Example 22

Example 1 is repeated using 8.6 g of urea prills, 0.28 g Carbowax® 8000, 1.0 g of the premix powder employed in Example 1 and 0.12 g sodium hydroxide powder. The resultant prills contain 10.1% active ingredient. Upon addition to slightly agitated water, the product totally dissolves in about 1 min as a result of forming the water soluble salt of the active ingredient in situ by reaction with the sodium hydroxide.

**Claims**

1. A water-soluble or water-dispersible, layered pesticidal granular composition for application by aqueous spraying wherein at least one layer comprises:
   (1) 0.1 to 50% of a water-soluble pesticide or water-soluble form thereof or water-dispersible form of a pesticide dispersed in;
   (2) 1 to 20% of a carrier selected from a water-soluble polyethylene glycol, polypropylene glycol or derivative, copolymer or mixture thereof having a weight average molecular weight in the range 3000-8000 covering the substrate (3) to form said layer thereon;
   (3) 50 to 98.9% of a water-soluble or water-dispersible granular substrate of a particle diameter of at least 500 microns;
   all percentages being by weight based on the total weight of the layer and substrate.

2. The granular composition of Claim 1 wherein the pesticide is embedded in the carrier.

3. The composition of Claim 1 wherein the percentages of pesticide, polyethylene glycol and substrate are 0.5 to 40%, 3 to 15% and 70 to 98% respectively.

4. The composition of Claim 2 or 3 wherein two or more incompatible pesticides are embedded in separate layers of carrier.

5. The composition of any of the preceding claims wherein the pesticide is selected from:
   2-[[N-(4-methoxy-6-methyl-1,3,5-triazin-2-yl)-N-methylamino]carbonyl]amino]sulfonyl]benzoic acid, methyl ester,
   3-[[[[(4-methoxy-6-methyl-1,3,5-triazin-2-yl)amino] carbonyl]amino]sulfonyl]-2-thiophene carboxylic acid, methyl ester,
   methyl 2-[[[[(4,6-dimethoxy-2-pyrimidinyl)amino] carbonyl]amino]sulfonyl]methylbenzoate,
   methyl-2-[[[[(4-methoxy-6-methyl-1,3,5-triazin-2-yl) amino]carbonyl]amino]sulfonyl]benzoate,

2-chloro-N-[4-methoxy-6-methyl-1,3,5-triazin-2-yl) amino]carbonyl)benzenesulfonamide, and agriculturally suitable salts and water dispersible formulations of the foregoing.

**6.** The composition of any of the preceding claims wherein the substrate is in the form of a prill.

**7.** The composition of Claim 6 wherein the prill is a urea prill.

**8.** The composition of any of the preceding claims wherein the polyethylene glycol has a weight average molecular weight in the range 3000-6000.

**9.** The composition of any of claims 1 to 4 or 8 wherein the substrate is a granule selected from:
2,4-dichlorophenoxyacetic acid,
4-chloro-2-methylphenoxyacetic acid,
( +/-)- or (R, + )-2-(4-chloro-2-methylphenoxy)propionic acid,
glyphosate,
metribuzin,
methabenzthiazuron,
combinations thereof and agriculturally suitable salts and solid formulations of the foregoing.

**10.** The composition of Claim 9 wherein the coating pesticide is selected from:
2-[[N-(4-methoxy-6-methyl-1,3,5-triazin-2-yl)-N-methylamino)carbonyl]amino]sulfonyl]benzoic acid, methyl ester,
3-[[[[(4-methoxyl-6-methyl-1,3,5-triazin-2-yl)amino]carbonyl]amino]sulfonyl]-2-thiophene carboxylic acid, methyl ester,
methyl 2-[[[[(4,6-dimethoxy-2-pyrimidinyl)amino]carbonyl]amino]sulfonyl]methyl benzoate, and
methyl-2-[[[[(4-methoxy-6-methyl-1,3,5-triazin-2-yl) amino]carbonyl]amino]sulfonyl]benzoate,
and agriculturally suitable salts and water dispersible formulations of the foregoing.

**11.** The composition of Claim 9 or 10 wherein the substrate is a granule of 2,4-dichlorophenoxyacetic acid, or an agriculturally suitable salt or solid formulation thereof.

**12.** A process for the preparation of a composition of any of claims 1-11 which comprises contacting said water-soluble or water-dispersible granular substrate with said carrier in the neat state, thereby coating the substrate, contacting the coated substrate while the carrier is in a liquid state with said water-soluble or water-dispersible, finely divided pesticide and thereafter recovering a coated granule.

**13.** The process of Claim 12 wherein the pesticide is introduced along with the glycol carrier.

**14.** A process for the preparation of a composition of any of claims 1-11 which comprises contacting said water-soluble or water-dispersible granular substrate with said carrier in the neat state, heating the mixture thus obtained to a temperature in the range of 60-125°C to at least partially melt the carrier and thereby coat the substrate, contacting the coated substrate while the carrier is in a molten state with said water-soluble or water-dispersible, finely divided pesticide and thereafter cooling the resultant composition under agitation to solidify the carrier.

**15.** The process of Claim 14 wherein the temperature is maintained in the range of 70-90°C.

**16.** A process for the preparation of a composition of any of Claims 1-11 which comprises preblending said pesticide with said carrier, whereafter the substrate is added.

**Patentansprüche**

**1.** Wasserlösliches oder wasserdispergierbares körniges Pestizidpräparat in Schichtform zum Ausbringen durch wäßriges Sprühen, worin wenigstens eine Schicht umfaßt:
(1) 0,1 bis 50 % eines wasserlöslichen Pestizids oder einer wasserlöslichen Form davon oder einer in Wasser dispergierbaren Form eines darin dispergierten Pestizids;
(2) 1 bis 20 % eines Trägerstoffs, ausgewählt aus wasserlöslichem Polyethylenglycol, Polypropylenglycol oder einem Derivat, einem Copolymeren oder einem Gemisch davon, mit einem Gewichtsmittelmolekulargewicht im Bereich von 3000 bis 8000, der das Substrat (3)bedeckt, wobei die genannte Schicht darauf gebildet wird;

(3) 50 bis 98,9 % eines wasserlöslichen oder wasserdispergierbaren körnigen Substrats mit einem Teilchendurchmesser von wenigstens etwa 500 μm;

wobei sich alle Prozentangaben, bezogen auf das Gesamtgewicht von Schicht und Substrat, auf das Gewicht beziehen.

2.   Körniges Präparat nach Anspruch 1, worin das Pestizid in den Trägerstoff eingebettet wird.

3.   Präparat nach Anspruch 1, worin die Prozentsätze von Pestizid, Polyethylenglycol und Substrat 0,5 bis 40 %, 3 bis 15 % bzw. 70 bis 98 % betragen.

4.   Präparat nach Anspruch 2 oder 3, worin zwei oder mehrere unverträgliche Pestizide in getrennte Schichten des Trägerstoffs eingebettet werden.

5.   Präparat nach einem der vorgenannten Ansprüche, worin das Pestizid ausgewählt wird aus:
2-[[N-(4-Methoxy-6-methyl-1,3,5-triazin-2-yl)-N-methylamino]-carbonyl]-amino]-sulfonyl]-benzoesäuremethylester,
3-[[[[(4-Methoxy-6-methyl-1,3,5-triazin-2-yl)-amino]carbonyl]-amino]-sulfonyl]-2-thiophencarbonsäuremethylester,
Methyl-2-[[[[(4,6-dimethoxy-2-pyrimidinyl)-amino]carbonyl]-amino]-sulfonyl]-methylbenzoat,
Methyl-2-[[[[(4-methoxy-6-methyl-1,3,5-triazin-2-yl)amino]-carbonyl]-amino]-sulfonyl]-benzoat,
2-Chlor-N-[4-methoxy-6-methyl-1,3,5-triazin-2-yl)amino]-carbonyl]-benzolsulfonamid,
und die landwirtschaftlich geeigneten Salze und wasserdispergierbaren Formulierungen des Zuvorgenannten.

6.   Präparat nach einem der vorgenannten Ansprüche, worin das Substrat in Form eines Granulats vorliegt.

7.   Präparat nach Anspruch 6, worin das Granulat ein Harnstoffgranulat ist.

8.   Präparat nach einem der vorgenannten Ansprüche, worin das Polyethylenglycol ein Gewichtsmittelmolekulargewicht im Bereich von 3000 bis 6000 aufweist.

9.   Präparat nach einem der Ansprüche 1 bis 4 oder 8, worin das Substrat als Körnchen vorliegt, ausgewählt aus:
2,4-Dichlorphenoxyessigsäure,
4-Chlor-2-methylphenoxyessigsäure,
(+/-)- oder (R,+)-2-(4-Chlor-2-methylphenoxy)-propionsäure,
Glyphosat,
Metribuzin,
Methabenzthiazuron,
Kombinationen davon und die landwirtschaftlich geeigneten Salze und festen Formulierungen des Zuvorgenannten.

10.   Präparat nach Anspruch 9, worin das Überzugspestizid ausgewählt wird aus:
2-[[N-(4-Methoxy-6-methyl-1,3,5-triazin-2-yl)-N-methylamino]-carbonyl]-amino]-sulfonyl]-benzoesäuremethylester,
3-[[[[(4-Methoxyl-6-methyl-1,3,5-triazin-2-yl)-amino]carbonyl]-amino]-sulfonyl]-2-thiophencarbonsäuremethylester,
Methyl-2-[[[[(4,6-dimethoxy-2-pyrimidinyl)-amino]carbonyl]-amino]-sulfonyl]-methylbenzoat, und
Methyl-2-[[[[(4-methoxy-6-methyl-1,3,5-triazin-2-yl)amino]-carbonyl]-amino]-sulfonyl]-benzoat,
und die landwirtschaftlich geeigneten Salze und wasserdispergierbaren Formulierungen des vorgenannten.

11.   Präparat nach Anspruch 9 oder 10, worin das Substrat ein Granulat aus 2,4-Dichlorphenoxyessigsäure oder ein landwirtschaftlich geeignetes Salz oder eine feste Formulierung davon ist.

**12.** Verfahren zur Herstellung eines Präparats nach einem der Ansprüche 1 bis 11, welches umfaßt Kontaktieren des genannten wasserlöslichen oder wasserdispergierbaren körnigen Substrats mit dem genannten Trägerstoff im Reinzustand, wodurch das Substrat überzogen wird, Kontaktieren des überzogenen Substrats, während der Trägerstoff im flüssigen Zustand vorliegt, mit dem genannten wasserlöslichen oder wasserdispergierbaren feinverteilten Pestizid und danach Gewinnen eines überzogenen Granulats.

**13.** Verfahren nach Anspruch 12, bei dem das Pestizid zusammen mit dem Glycol-Trägerstoff eingearbeitet wird.

**14.** Verfahren zur Herstellung eins Präparats nach einem der Ansprüche 1 bis 11, welches umfaßt Kontaktieren des genannten wasserlöslichen oder wasserdispergierbaren körnigen Substrats mit dem genannten Trägerstoff im Reinzustand, Erhitzen des so erhaltenen Gemisches auf eine Temperatur im Bereich von 60 bis 125 °C, um den Trägerstoff wenigstens teilweisen zu schmelzen und um dadurch das Substrat zu überziehen, Kontaktieren des überzogenen Substrats, während der Träger im geschmolzenen Zustand vorliegt, mit dem genannten wasserlöslichen oder wasserdispergierbaren fein verteilten Pestizid und danach Abkühlen der resultierenden Masse unter Rühren, um den Trägerstoff zu verfestigen.

**15.** Verfahren nach Anspruch 14, bei dem die Temperatur im Bereich von 70 bis 90 °C gehalten wird.

**16.** Verfahren zur Herstellung eines Präparats nach einem der Ansprüche 1 bis 11, welches umfaßt Vormischen des genannten Pestizids mit dem genannten Trägerstoff, wonach das Substrat hinzugegeben wird.

**Revendications**

**1.** Une composition granulaire pesticide en couches, hydrosoluble ou hydrodispersible, pour application par pulvérisation aqueuse dans laquelle au moins une couche comprend :
(1) 0,1 à 50 pour cent d'un pesticide hydrosoluble ou d'une forme hydrosoluble de celui-ci ou d'une forme hydrodispersible d'un pesticide dispersé dedans ;
(2) 1 à 20 pour cent d'un véhicule choisi parmi le polyéthylène-glycol hydrosoluble, le polyproylène-glycol ou un dérivé de celui-ci, un copolymère ou un mélange de ceux-ci ayant un poids moléculaire moyen en poids de l'ordre de 3000 à 8000 couvrant le substrat (3) pour y former ladite couche ;
(3) 50 à 98,9 pour cent d'un substrat granulaire hydrosoluble ou hydrodispersible d'un diamètre des particules d'au moins environ 500 µm ;
 tous les pourcentages étant en poids par rapport au poids total de la couche et du substrat.

**2.** La composition granulaire de la revendication 1 dans laquelle le pesticide est enrobé dans le véhicule.

**3.** La composition de la revendication 1 dans laquelle les pourcentages de pesticide, de polyéthylène-glycol et de substrat sont respectivement de 0,5 à 40 pour cent, 3 à 15 pour cent et 70 à 98 pour cent.

**4.** La composition de la revendication 2 ou 3 dans laquelle deux pesticides incompatibles ou plus sont enrobés dans des couches séparées du véhicule.

**5.** La composition de l'une quelconque des revendications précédentes dans laquelle le pesticide est choisi parmi :
l'ester de méthyle de l'acide 2-[ [N-(4-méthoxy-6-méthyl-1,3,5-triazine-2-yl) -N-méthylamino]carbonyl]-amino]sulfonyl]benzoïque,,
l'ester de méthyle de l'acide 3-[[[[ (4-méthoxy-6-méthyl-1,3,5-triazine-2-yl)amino] carbonyl]amino]-sulfonyl]-2-thiophène carboxylique,
le 2-[[[[(4,6-diméthoxy-2-pyrimidinyl)amino] carbonyl]amino]sulfonyl]méthyl benzoate de méthyle,
le -2-[[[[(4-méthoxy-6-méthyl-1,3,5-triazine-2-yl) amino]carbonyl]amino]sulfonyl]benzoate de méthyle,
le 2-chloro-N-[4-méthoxy-6-méthyl-1,3,5-triazine-2-yl) amino]carbonyl)benzène-sulfonamide,
et les sels convenant pour l'agriculture et les formulations hydrodispersibles des précédents.

22

6. La composition de l'une quelconque des revendications précédentes dans laquelle le substrat est sous forme de prills (granulés).

7. La composition de la revendication 6 dans laquelle le prill (granulé) est un prill (granulé) d'urée.

8. La composition de l'une quelconque des revendications précédentes dans laquelle le polyéthylène-glycol a un poids moléculaire moyen en poids de l'ordre de 3000 à 6000.

9. La composition de l'une quelconque des revendications 1 à 4 ou 8 dans laquelle le substrat est un granulé choisi parmi :
l'acide 2,4-dichlorophénoxyacétique,
l'acide 4-chloro-2-méthylphénoxyacétique,
l'acide ( + /-)- ou (R, + )-2-(4-chloro-2-méthylphénoxy)propionique,
le glyphosate,
la métribuzine,
le méthabenzthiazuron,
les combinaisons de ceux-ci et les sels convenant pour l'agriculture et les formulations solides des précédents.

10. La composition de la revendication 9 dans laquelle le pesticide de revêtement est choisi parmi :
l' ester de méthyle de l'acide 2-[ [N-(4-méthoxy-6-méthyl-1,3,5-triazine-2-yl) -N-méthylamino]carbonyl]-amino]sulfonyl]benzoïque,
l'ester de méthyle de l'acide 3-[[[[ (4-méthoxy-6-méthyl-1,3,5-triazine-2-yl)amino] carbonyl]amino]-sulfonyl]-2-thiophène carboxylique,
le 2-[[[[(4,6-diméthoxy-2-pyrimidinyl)amino] carbonyl]amino]sulfonyl]méthylbenzoate de méthyle,
le -2-[[[[(4-méthoxy-6-méthyl-1,3,5-triazine-2-yl) amino]carbonyl]amino]sulfonyl]benzoate de méthyle,
et les sels convenant pour l'agriculture adaptés et les formulations hydrodispersibles des précédents.

11. La composition de la revendication 9 ou 10 dans laquelle le substrat est un granulé d'acide 2,4-dichlorophénoxyacétique, ou un sel convenant pour l'agriculture ou une formulation solide de celui-ci.

12. Un procédé pour la préparation d'une composition de l'une quelconque des revendications 1 à 11 qui comprend la mise en contact dudit substrat granulaire hydrosoluble ou hydrodispersible avec ledit véhicule exempt de solvant, de manière à revêtir le substrat, la mise en contact du substrat revêtu tandis que le véhicule est à l'état liquide avec ledit pesticide hydrosoluble ou hydrodispersible finement divisé, puis la récupération d'un granulé revêtu.

13. Le procédé de la revendication 12 dans lequel le pesticide est introduit avec le véhicule glycol.

14. Un procédé pour la préparation d'une composition de l'une quelconque des revendications 1 à 11 qui comprend la mise en contact dudit substrat granulaire hydrosoluble ou hydrodispersible avec ledit véhicule exempt de solvant, le chauffage du mélange ainsi obtenu à une température de l'ordre de 60 à 125° C jusqu'à fondre au moins partiellement le véhicule et revêtir ainsi le substrat, la mise en contact du substrat revêtu tandis que le véhicule est à l'état fondu avec ledit pesticide hydrosoluble ou hydrodispersible finement divisé, puis le refroidissement de la composition résultante sous agitation pour solidifier le véhicule.

15. Le procédé de la revendication 14 dans lequel la température est maintenue dans la région de 70 à 90° C.

16. Un procédé pour la préparation d'une composition de l'une quelconque des revendications 1 à 11 qui comprend le prémélange dudit pesticide avec ledit véhicule, le substrat étant ajouté par la suite.